# EUROPEAN PATENT APPLICATION

(11) **EP 4 765 105 A1**
(43) Date of publication of application: **24.06.2026**
(21) Application number: 25223875.3
(22) Date of filing: 16.12.2025
(51) Int. Cl.: G10K 15/02

(54) **STEREO IMAGING ENGINE SOUND SYNTHESIS**

(30) Priority: 18.12.2024 US 202463735866 P; 15.12.2025 US 202519419215
(71) Applicant: Harman Becker Automotive Systems, Inc., Novi, MI 48377 (US)
(72) Inventor: TACKETT, Jeffrey Charles, Novi, MI, 48377 (US); FORNARI, Tessa Victoria, Novi, MI, 48377 (US); DiPASSIO III, Joseph James, Novi, MI, 48377 (US)
(74) Representative: Westphal, Mussgnug & Partner, Patentanwälte mbB

(57) **Abstract**

An engine sound synthesis generator system for a vehicle having an engine sound synthesis generator module executable by a processor to receive a signal indicative of an operating condition of the vehicle, receive a plurality of single-channel sound information signals representative of the operating conditions of the vehicle, apply stereo imaging to split the single-channel sound information signals into a multi-channel signals, and arrange the multi-channel signals into one or more sound signals to be played back at one or more loudspeakers **in** an audio system on the vehicle. A single instance of at least one audio effect may be applied to the multi-channel signals **in** aggregate. A gain may be applied to each of the multi-channel signals, individually or in aggregate, to amplify or attenuate the audio effect for each audio signal.

## Description

### CROSS-REFERENCE TO RELATED APPLICATIONS

This application claims the benefit of U.S. Provisional Application Serial No. 63/735,866, STEREO IMAGING ENGINE SOUND SYNTHESIS, filed December 18, 2024, the disclosure of which is incorporated in its entirety by reference.

### TECHNICAL FIELD

The disclosure relates generally to engine sound synthesis and, more specifically, to stereo imaging for engine sound synthesis.

### BACKGROUND OF THE INVENTION

The addition of synthetic engine sounds is one way of enhancing an experience of operating a vehicle. Synthetic engine sounds may be played through the sound production devices of the vehicle to supplement and/or modify the sound produced by electric, hybrid-electric, or internal combustion engine vehicles. In electric and hybrid-electric vehicles, such synthetic audio may provide the driver with an acoustic feedback about the operational status of the vehicle, e.g., travelling speed. In addition, synthetic engine sounds may support vehicle safety and serve an aesthetic role, e.g., by mimicking sounds a driver may expect and/or find pleasant during the driving experience.

For example, electric engines are typically quieter than internal combustion engines. Or, in another example, a type of car, such as a sedan v. a sports car, will have different engine sounds. When a vehicle is accelerating, occupants want to hear sounds that correspond to the sudden acceleration being felt. To address this, Engine Sound Synthesis (ESS) algorithms use inputs from vehicle control signals like speed, revolutions per minute (RPM), torque, pedal position, among others, to synthetically create an engine sound to enhance the driving experience.

When synthetic engine sound is reproduced through loudspeakers, the driver will perceive the sound as different from a real combustion engine because each speaker in the vehicle cabin receives and plays back the same audio signal from the ESS sound sources. The result is a sound that may be perceived to be coming from a space that is in front of each occupant and centered at a front dashboard. The result is a sound that is perceived to be artificial, or unnatural. There is a general need for an improved method for synthesizing motor sound.

### SUMMARY OF THE INVENTION

An engine sound synthesis generator system for a vehicle having an engine sound synthesis generator module executable by a processor to receive a signal indicative of an operating condition of the vehicle, receive a plurality of single-channel sound information signals representative of the operating conditions of the vehicle, apply stereo imaging to split the single-channel sound information signals into multi-channel signals, and arrange the multi-channel signals into one or more sound signals to be played back at one or more loudspeakers in an audio system on the vehicle.

In one or more embodiments the engine sound synthesis generator module executable by the processor to apply a single instance of at least one audio effect to the multi-channel signals in aggregate.

In or more embodiments, a vehicle audio system has a plurality of speakers and a computer device configured to execute an engine sound synthesis generator (ESSG) module. The ESSG module receives input signals indicative of one or more operating conditions of the vehicle-such as throttle position, road speed, or regenerative braking current-and retrieves single-channel sound information from a sound library corresponding to a selected engine or sound type.

A stereo imaging processing block converts the single-channel sound information into multi-channel signals. One or more audio effects engines are then applied to the multi-channel signals, where each audio effect is instantiated only once and applied in aggregate to the multi-channel signals rather than separately per channel. A gain control may be applied per effect and/or per channel. An audio mixer routes the processed multi-channel signals to a plurality of speakers in the vehicle cabin and, optionally, external speakers or electromagnetic shaker panels.

By using a single instance of each audio effect engine to process the multi-channel signals collectively, the ESSG system significantly reduces processor load and memory usage while improving psychoacoustic coherence. The listener perceives the various sound sources as emanating from the same acoustic space, resulting in a more natural, immersive stereophonic engine sound field.

In one or more embodiments a method is provided for generating synthesized engine sound in a vehicle audio system based on vehicle operating conditions, retrieving corresponding sound information, splitting the sound into multi-channel signals, applying one or more audio effects in aggregate with per-effect and/or per-channel gain, and routing the resulting simulated sound signals to vehicle loudspeakers.

In one or more embodiments, a computer-readable medium is provided having instructions that, when executed by a processor, cause the processor to perform the above method.

### BRIEF DESCRIPTION OF DRAWINGS

One or more embodiments of the present disclosure are pointed out with particularity in the appended claims. However, other features of the embodiments will become more apparent and are best understood by referring to the detailed description in conjunction with the accompanying drawings in which:
FIG. 1 is an example of a vehicle having an engine sound synthesis generator (ESSG) system integrated with a vehicle audio system and speakers;
FIG. 2 is a block diagram of an ESSG system including a computer device, memory, sound library, and engine sound synthesis generator module;
FIG. 3 is a block diagram of a simulation module of the engine sound synthesis generator; and
FIG. 4 is a flowchart of a method for generating synthesized engine sound in a vehicle audio system.

### DETAILED DESCRIPTION OF THE INVENTION

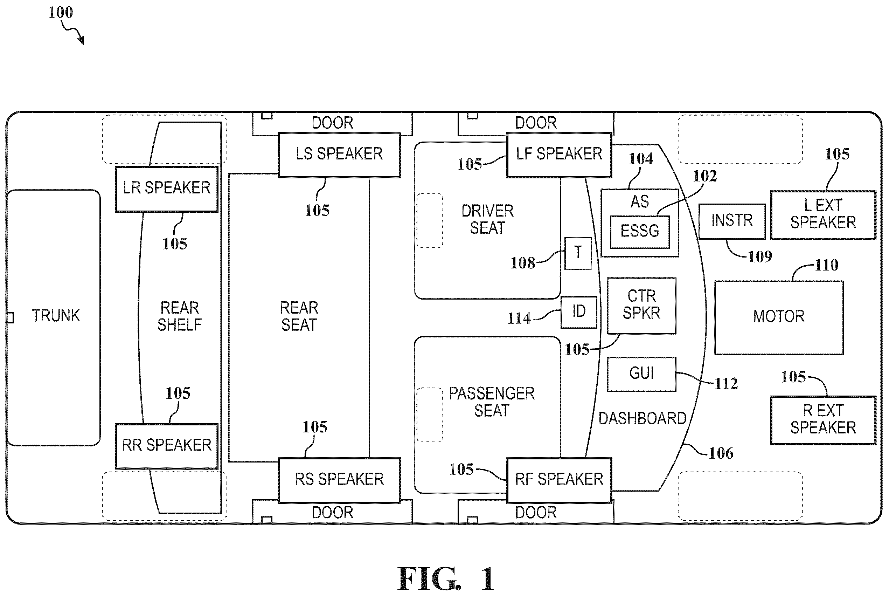

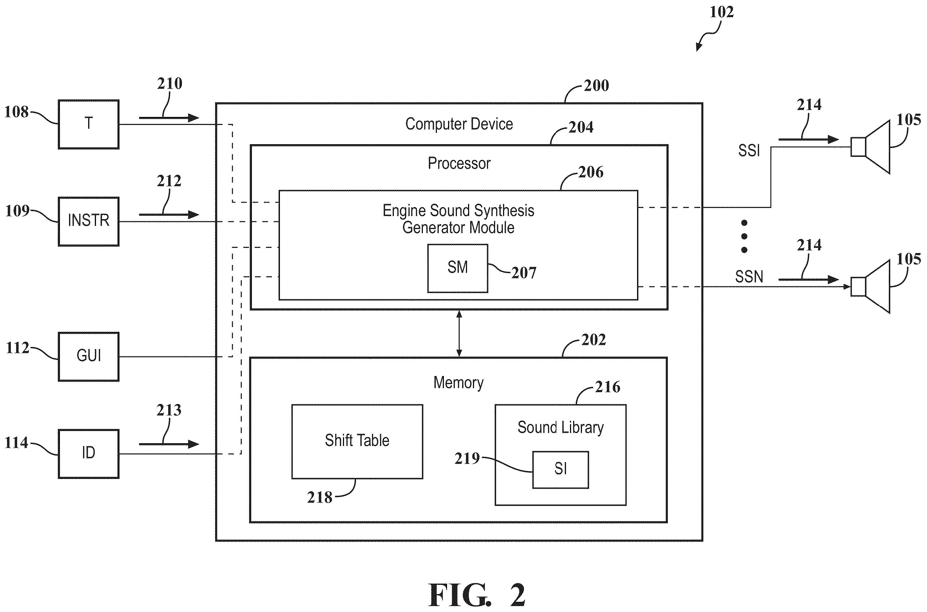

In FIG. 1, a vehicle 100 is shown as including an engine sound synthesis generator (ESSG) system 102. The vehicle 100 may include an audio system (AS) 104, shown in FIG. 1 as being located in a dashboard 106 of the vehicle 100. The audio system 104 may include various components associated with a vehicle audio system such as AM/FM radio, CD player, equalizer, amplifier, mobile phone interface, navigation system, and any other components suitable for a vehicle audio system. The audio system 104 may be two channel stereo or multi-channel, such as a five, six, or seven channel surround system. The audio system 104 may include software modules, hardware modules, or a combination thereof used to process audio signals provided to a plurality of speakers 105 positioned throughout the vehicle 100. The audio system 104 may include a processor and a memory capable of supporting the ESSG system 102, such as that described later with regard to FIG. 2.

In one example, the vehicle 100 may be a fully or partially-electric vehicle. The vehicle 100 may be driven by an electric motor 110. In other examples, the vehicle 100 may include an internal combustion engine. The motor 110 of the vehicle 100 may generate sounds different than those that may be heard by vehicle occupants in other vehicles types, such as a vehicle having an internal combustion engine. Occupants of an electric vehicle may desire to experience sounds associated with an internal combustion engine or other sound effect. The ESSG system 102 may be configured to simulate sounds associated with a vehicle being driven by a combustion engine, such as a car, jet, motorboat, rocket, or other vehicle type. The ESSG system 102 may also be configured to simulate other sounds as well. In one example, the ESSG system 102 may generate simulated engine sounds based on the operating condition of the vehicle 100, such as road speed and throttle position. For example, the ESSG system 102 may be configured to generate simulated sounds associated with a vehicle having a multi-gear internal combustion engine. In one example, the vehicle 100 may include an internal combustion engine. The ESSG system 102 may be configured to generate simulated sounds to match the sounds of the internal combustion engine allowing the sound of the internal combustion engine experienced by a listener to be enhanced by the simulated sounds.

The sounds may be produced through speakers 105 present in the vehicle 105. The speakers 105 may include a center (CTR) speaker, right front (RF) and left front (LF) speakers, right side (RS) and left side (LS) speakers, and right rear (RR) and left rear (LR) speakers as shown in FIG. 1. In one example, the vehicle 100 may also include a right external (R EXT) and a left external (L EXT) speaker positioned in the motor compartment of the vehicle 100. Each of the speakers 105 may be driven to produce sound waves based on audio signals generated by the ESSG system 102. The right and left external speakers may be driven to produce simulated engine sounds that may be audible outside/external to the vehicle 100 and to occupants inside of the vehicle 100. In one example, sounds waves emitted by the external speakers may be used to vibrate portions of a motor compartment of the vehicle 100. In other examples, electromagnetic shaker panels may be used with the ESSG system 102 to generate simulated engine sounds alone or in conjunction with the speakers 105. This may provide a more realistic vehicle sound to occupants in the vehicle 100 by producing simulated engine sounds associated with vehicle components.

The ESSG system 102 may generate sounds based on various operating conditions of the vehicle 100. For example, the ESSG system 102 may receive an input signal based on a throttle (T) 108 of the vehicle 100 and road speed of the vehicle 100. "Road speed" may refer to a velocity related to a particular vehicle, including aircraft, watercraft, or any other vehicle types. "Road speed" may also refer to a velocity of wheeled vehicle regardless of whether the vehicle is travelling on road, off road, or some other non-road surface.

A position level of the throttle 108 may be provided directly to the ESSG system 102 as shown in FIG. 1 or may be indirectly obtained by the ESSG system 102 through a controlled area network (CAN) (not shown) or other suitable vehicle communication bus system. The road speed of the vehicle 100 may be determined at an instrumentation module 109 that may generate a road speed signal indicative of the road speed of the vehicle 100. The ESSG system 102 may receive the throttle level of the throttle 108 and the road speed signal. The ESSG system 102 may generate simulated engine sounds based on the throttle level and the road speed signal. In other examples, one or more other input signals may be utilized in addition to or in lieu of the throttle position and road speed, such as motor load, torque, power, vehicle light status, or cruise control operation.

The vehicle 100 may also include an input device (ID) 114. The input device 114 may include a manual gear shifter allowing a vehicle occupant to manually provide input to the ESSG system 102 indicating when a simulated upshift or downshift is desired. The input device 114 may be used in conjunction with automatic simulated multi-gear functions, allowing the ESSG system 102 to operate in a semi-automatic manner. In one example, the input device 114 may be a lever mounted in a steering column of the vehicle 100, dashboard 106, or in another appropriate area within the vehicle 100. In other examples, the input device 114 may include multiple levers, or other mechanisms configured to receive manual input, disposed within the vehicle 100, such as separate dedicated upshift or downshift levers. Levers or other devices may be multi-positional allowing a particular simulated gear to have a specific position.

The ESSG system 102 may be implemented within the audio system 104 as shown in FIG. 1 or may be implemented as a stand-alone system separate from the audio system 104. The ESSG system 102 may produce audible sound through one more of the speakers 105, which may be shared with the audio system 104 or strictly dedicated to the ESSG system 102. Alternatively, additional speakers 105 may be added to those shown in FIG. 1 to use with the ESSG system 102.

The ESSG system 102 may select a subset of available speakers 105 to generate desired simulated engine sound based on input from a current vehicle occupant or based on predetermined criteria. For example, a first driver of the vehicle 100 may desire that the left and right external and the center speakers be used to produce sounds from the ESSG system 102. A second subsequent driver of the vehicle 100 may desire that only the center speaker be used to produce sounds from the ESSG system 102 and select such a speaker configuration. In one example, the ESSG system 102 may include and/or be in communication with a user interface, such as graphical user interface (GUI) 112 on board the vehicle to allow the particular speaker selections, sound effects, etc., to be selected by an occupant of the vehicle 100. The GUI 112 may be integrated to control various aspects of the vehicle 100 such as the audio system 104, environmental controls, etc.

FIG. 2 is a block diagram of the ESSG system 102, such as that described in FIG. 1. The ESSG system 102 may include a computer device 200 having a memory 202 and a processor 204. The memory 202 may include one or more memories and may be computer-readable storage media or memories, such as a cache, buffer, RAM, removable media, hard drive or other computer readable storage media. Computer readable storage media may include various types of volatile and nonvolatile storage media. Various processing techniques may be implemented by the processor 204 such as multiprocessing, multitasking, parallel processing and the like, for example. The processor 204 may include one or more processors. The computer device 200 may be included in the audio system 104 as described with regard to FIG. 1 or may be a stand-alone device in addition to the audio system 104.

The processor 204 may execute an engine sound synthesis generator module 206 included in the ESSG system 102. As described herein, the term "module" may be defined to include software, hardware or some combination thereof executable by the processor 204. Software may include instructions stored in the memory 202, or other memory device, that are executable by the processor 204 or another processor. Hardware may include various devices, components, circuits, gates, circuit boards, and the like that are executable, directed, and/or controlled for performance.

The computer device 200 may receive input signals from various sensors or other sources based on operating conditions of the vehicle 100. In FIG. 2, the computer device 200 may receive a throttle level signal 210 from the throttle 108 and a road speed signal 212 from the instrumentation module 109. The computer device 200 may also generate a plurality of simulated sound signals 214 that may be used to produce sounds through driving the speakers 105. Each simulated sound signal 214 is individually designated as SS1 through SSN in FIG. 2, where N is the number of speakers 105 that may receive a simulated sound signal 214.

The engine sound synthesis generator module 206 may receive input from the GUI 112 indicating a user-selected parameter related to the particular sounds desired, such as a particular make/model of an automobile, a jet, rocket, spacecraft, etc., or a non-vehicle sound. A user may select the desired sound from a plurality of sounds stored in a sound library 216 stored in the memory 202. The sound library 216 may be updated to add other sounds or to update current sounds through the GUI 112, wireless communication, wired communication, or any other manner of communicating update information to the computer device 200.

In one example, the engine sound synthesis generator module 206 may be configured to generate simulated sounds signals to include simulated gear shifting and operation in a particular gear for a simulated engine type based on the operating conditions of the vehicle 100. The simulated gear shifting may refer to simulation associated with operation of a geared engine found in various vehicles having combustion engines, which may include upshifting, i.e., transitioning from a current gear to a higher gear, and downshifting, i.e., transitioning from a current gear to a lower gear.

Based on the throttle signal 210 and the road speed signal 212, the engine sound synthesis generation module 206 may generate sounds associated with operating vehicle such as accelerating and decelerating in multiple simulated gears along with upshifting and downshifting into the gears. The engine sound synthesis generator module 206 may access a shift table 218 stored in the memory 202. Sounds associated with simulated gear shifting may be based on the actual road speed of the vehicle 100 and the throttle position of the throttle 108. Use of the simulated gear shifting may provide an occupant of the vehicle 100 a richer experience associated with simulated engine sounds associated with a particular vehicle type.

The sound library 216 may be configured to store information regarding simulated sounds for particular engine types. The sounds may be stored as information for each engine type that may be implemented by the ESSG module 206 to generate the simulated sound signal 214. In one example, the sounds may be stored in the sound library 216 as sound information ("SI") 219 related to sound measurements taken for particular engine types. Sound measurements for particular engine types may be taken from an actual engine of the particular type and analyzed to determine various sound characteristics, such as the dominant harmonics of a particular engine type, as well as other sound characteristics associated with the particular engine type. These sound measurements may be processed into data represented by the sound information 219 that may be used by the ESSG module 206. In one example, the ESSG module 206 may implement a synthesizer module ("SM") 207, which allows the ESSG module 206 to generate a simulated sound signal 214 based on the sound information 219 stored in the sound library 216.

The sound library 216 may include a look-up table mapping sound information associated with sounds for each available engine type to corresponding operating conditions of the vehicle 100. For example, the sound information 219 may be stored digitally so that a particular portion of the sound information 219 corresponds to particular operating conditions of the vehicle 100. The sound information 219 contains unique sources of sound which formats may include, but are not limited to, audio file (WAV) players, oscillators, granular synthesizers, and others. The sound information 219, may be, but is not limited to, for example, an audio file in a loop or utilizing various audio synthesis techniques. The ESSG module 206 may then receive the signals 210, 212, and/or 213 from the throttle 108, instrumentation module 109, and input device 114, respectively, and based on the signals 210, 212, and/or 213, retrieve the corresponding sound information 219 from the sound library 216 to synthesize the simulated sound signal 214. As the vehicle 100 changes in speed, the ESSG module 206 may manipulate the simulated sound signal 214 to drive the speakers 105 to produce the desired simulated engine sound. The ESSG module 206 may also implement the shift table 218 in adjusting the simulated sound signals 214 to produce the desired sounds through the speakers 105.

The ESSG module 206 may also monitor a differential of vehicle speed, which may serve as a proxy for the position of the throttle 108 and load of the motor 110 in a fully-electric or hybrid vehicle. Based on the differential, the ESSG module 206 may determine the amount energy regeneration occurring in the motor 110. For example, the motor 110 may perform regenerative braking in order to slow the vehicle 100. The ESSG module 206 may use the current generated by the motor 110 during regenerative braking to determine that the vehicle is decelerating. For example, the ESSG module 206 may retrieve sound information 219 from the sound library 216 corresponding to the level of regenerative braking current and generate the simulated sound signal 214 based on the retrieved sound information 219. The simulated sound signal 214 may drive the speakers 105 to produce sounds associated with engine braking of the particular engine type being simulated. Thus, sounds produced by the speakers 105 may also provide an audio indication of the level of regenerative braking taking place to a listener.

To create an immersive sound experience in the vehicle, sound from individual sound sources may be routed (or panned) to different sets of speakers 105. Audio effects, such as but not limited to, reverb, delay, compression, modulation, expansion, equalization, may also be applied to alter the sound of the audio signal to add tone, color, and texture to the sound.

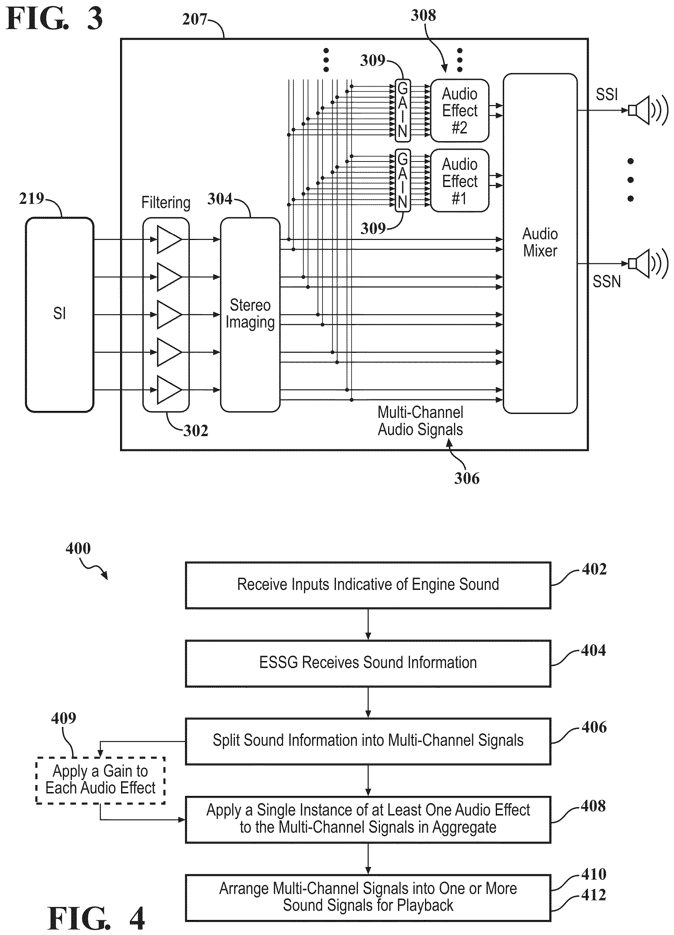

FIG. 3 is a block diagram of the SM 207, such as that described in FIG. 2. The SM 207 allows the ESSG module 206 to generate a simulated sound signal 214 based on the sound information 219 stored in the sound library 216. The sound information 219 is retrieved from the sound library as single-channel audio signals. The SM may apply filters 302 to the sound information 219 retrieved from the sound library 216.

A stereo imaging processing block 304 processes the sound information to expand the single-channel simulated sound signals of the sound information 219 into a multi-channel audio representation 306. Expanding the single channel sound signal effectively splits the sound information 219 signal from the sound library 216 into multi-channel signals. Having the sound information 219 signal in multi-channel format allows for dynamic routing of sound from each sound information 219 signal to individual speakers 105 or predetermined groups of speakers 105 for creating the immersive sound experience. For example, using a multi-channel format, a particular sound information 219 signal may be routed to sound like it is emanating from a left side of the vehicle cabin. In an ESSG system that utilizes only single-channel audio signals, this type of dynamic routing would not be possible because single-channel audio is routed to all speakers and each speaker plays back the same audio signal causing the sound to be perceived as coming from a space that is in front of an occupant and centered on the front dashboard. The result is a monophonic sound that may be perceived to be unnatural. The stereophonic ESS sound of the inventive subject matter immerses occupants in a more natural, and thereby more pleasant, sound field.

One or more audio effects 308 are applied to the multi-channel signals 306. A single instance of each audio effect is applied to the multi-channel audio signals 306 in aggregate. An audio mixer 310 arranges the multi-channel signals 306 to generate one or more simulated sound signals 214(1)-214(N) for distribution to each loudspeaker 105. Using a single instance of each audio effect engine 308 reduces the number of audio effects engines that are used by the ESSG system, by a factor equal to the number of speakers in the vehicle cabin. This reduction in the number of effects engines saves processing power and memory, advantageously making room for more distinct audio effects to be included in the ESSG system which add to the ability to create the immersive experience even more natural.

Another advantage of using single instance of each audio effect 308 is that the sound information 219 signals are processed together. For effective ESS, it is desirable that the listener feels like each of the sound sources are emanating from the same acoustic space. In the prior art, this is clouded by processing the signal from each sound source through a separate instance of each audio effect. Applying a separate audio effect engine to each individual signal causes psychoacoustic phenomena such as muddiness and issues with acoustic phase, resulting in an overall lack of immersion.

Yet another advantage is that each audio effect may be applied in varying amounts. A gain 309 may be applied to each audio effect being applied to each of the multi-channel signals, either individually, or in aggregate at the audio effect engine 308. The gain 309 may amplify or attenuate the audio signal relative to the original multi-channel audio signal, thereby affecting individual adjustments for each audio effect engine 308.

FIG. 4 is a flowchart of a method 400 for generating synthesized engine sound in an audio system of a vehicle. During operation of the vehicle, various operating conditions associated with the vehicle may be monitored, such as throttle position, road speed, any particular selection that was made by a user through the GUI, etc. At block 402 the ESSG system receives inputs that are representative of the various operating conditions that are indicative of an engine sound to be synthesized for output by the vehicle audio system. At block 404 the ESSG system receives sound information from the sound library that is relevant to the various operating conditions being monitored. For example, if the vehicle is accelerating on a curved road, the various operating conditions being affected will be associated with sound information that is stored in the sound library. That sound information will be used by the ESSG system in the generation of appropriate synthesized sound signals to be played back at the loudspeakers in the audio system.

At block 406 The EESG system splits the single-channel sound information into multi-channel signals. Optionally, at block 408, at least one instance of an audio effect may be applied to one or more of the multi-channel signals. At block 409 a gain may be applied to the audio effect for each channel of the multi-channel signals. As discussed above, the gain may amplify or attenuate each of the multi-channel signals independently to modify each audio effect.

At block 410 an audio mixer arranges the multi-channel signals to generate a sound signal that is sent to the loudspeakers in the vehicle audio system. At block 412 the ESSG system sends an appropriate sound signal to each loudspeaker in the vehicle audio system.

Advantages in both efficiency of the ESSG system and for the psychoacoustic considerations necessary to creating an immersive sound experience are realized by the present invention. Prior art systems have attempted to create a stereo sound field from a monophonic sound signal by duplicating and panning the sound from various sources and adding spatialization-based audio effects, like artificial reverberation, to the sources. For example, an audio effect such as reverb creates a sound that continues after the original sound source has stopped. The reverb block would be added to create a sense of space and depth within audio. However, applying artificial reverberation to each single-channel signal requires adding reverb in line with each of the speakers in the vehicle cabin. Reverb blocks can consume a significant portion of embedded resources because they use a lot of the processor's execution time, as well as a significant amount of memory. The present invention is advantageous because it uses only a single instance of each audio effect and applies it in aggregate to the multi-channel signals. This results in a much more efficient system without affecting the overall quality of the psychoacoustic effects.

The method may be carried out by any combination of one or more computer readable medium(s). The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the inventive subject matter are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While various embodiments of the invention have been described, it will be apparent to those of ordinary skill in the art that many more embodiments and implementations are possible within the scope of the inventive subject matter. Accordingly, the invention is not to be restricted in light of the attached claims and their equivalents.

## Claims

1. An engine sound synthesis generator system for a vehicle having an audio system coupled to a plurality of loudspeakers, the system comprising:
a computer device coupled to the audio system and configured to execute an engine sound synthesis generator (ESSG) module, the computer device comprising:
a memory configured to store sound information and instructions;
a processor in communication with the memory to execute the instructions to cause the EESG module to;
receive one or more input signals indicative of one or more operating conditions of the vehicle;
retrieve, from a sound library stored in the memory, sound information associated with a selected engine sound type, the sound information comprising a single-channel audio signal;
convert the single-channel audio signal into a multi-channel audio representation;
apply, using a single instance of an audio effect engine, at least one audio effect to the multi-channel audio representation in aggregate;
apply a gain to the at least one audio effect for one or more channels of the multi-channel audio representation;
generate a plurality of simulated sound signals based on the multi-channel audio representation with the at least one audio effect and the gain applied; and
provide the plurality of simulated sound signals to the audio system for driving predetermined loudspeakers in the plurality of loudspeakers to produce synthesized engine sound in the vehicle.

2. The engine sound synthesis generator system as claimed in claim 1, wherein one or more operating conditions comprise at least one of: a throttle position, a road speed, a motor load, torque, power, vehicle light status, or cruise control operation.

3. The engine sound synthesis generator system as claimed in claim 1 or 2, wherein the vehicle comprises an electric vehicle or a hybrid vehicle, and the one or more input signals further comprise a signal indicative of regenerative braking current generated by a traction motor of the vehicle.

4. The engine sound synthesis generator system as claimed in claim 3, wherein the ESSG module is further configured to:
determine a level of regenerative braking based on the regenerative braking current; and
retrieve sound information corresponding to engine braking based on the level of regenerative braking.

5. The engine sound synthesis generator system as claimed in any of claims 1 to 4, wherein the sound library comprises sound information corresponding to a plurality of engine types, including at least one of an internal combustion engine, a jet engine, a marine engine, or a rocket engine.

6. The engine sound synthesis generator system as claimed in any of claims 1 to 5, wherein the sound information is derived from sound measurements taken from an actual engine of the selected engine sound type and processed to determine one or more sound characteristics including dominant harmonics.

7. The engine sound synthesis generator system as claimed in any of claims 1 to 6, wherein the ESSG module is further configured to access a shift table stored in the memory, the shift table mapping simulated gear states to the one or more operating conditions of the vehicle, and wherein generating the plurality of simulated sound signals comprises simulating upshifts and downshifts between simulated gears.

8. The engine sound synthesis generator system as claimed in any of claims 1 to 7, wherein the multi-channel audio representation comprises a stereophonic or surround sound representation and the ESSG module is configured to dynamically route sound to different subsets of the plurality of loudspeakers to create an immersive sound field.

9. The engine sound synthesis generator system as claimed in any of claims 1 to 8, wherein converting the single-channel audio signal into a multi-channel audio representation further comprises stereo imaging processing.

10. The engine sound synthesis generator system as claimed in claim 9, further comprising dynamic routing of sound from each sound information signal to predetermined loudspeakers in the plurality of loudspeakers.

11. A method for generating a synthesized engine sound in an audio system of a vehicle, the method carried out by a processor having a non-transitory computer-readable storage medium encoded with computer-executable instructions, the method comprising the steps of:
receiving, at an engine sound synthesis generator (ESSG) system in a vehicle, at least one signal indicative of at least one operating condition of the vehicle;
retrieving, from a sound library, sound information associated with a selected engine sound type, the sound information comprising a single-channel audio signal;
selecting a plurality of single-channel sound information signals from the sound library in response to the at least one operating condition of the vehicle;
converting one or more of the single-channel sound information signals into a multi-channel audio representation;
applying, using a single instance of an audio effect engine, at least one audio effect to the multi-channel audio representation in aggregate;
applying a gain to the at least one audio effect for one or more channels of the multi-channel audio representation;
mixing the multi-channel audio representation with at least one audio effect and the gain applied to generate a plurality of simulated sound signals; and
outputting the plurality of simulated sound signals to a plurality of loudspeakers in the audio system of the vehicle.

12. The method as claimed in claim 11, further comprising the steps of:
monitoring regenerative braking current of a traction motor of the vehicle; and
modifying the plurality of simulated sound signals based on a level of regenerative braking current to simulate engine braking of the selected engine sound type.

13. The method as claimed in claim 11 or 12, further comprising the steps of:
accessing a shift table mapping simulated gear states to the one or more operating conditions; and
modifying the plurality of simulated sound signals to simulate upshifts and downshifts between simulated gears based on the one or more operating conditions.

14. The method as claimed in any of claims 11 to 13, further comprising the step of routing different portions of the multi-channel audio representation to different subsets of the plurality of loudspeakers to create a stereophonic sound field perceived as emanating from a common acoustic space.

15. The method as claimed in any of claims 11 to 14, further comprising the steps of:
receiving, via a user interface, a user selection of an engine sound type from a plurality of stored engine sound types; and
updating the sound library with additional sound information corresponding to an engine sound type via at least one of a wired or wireless communication link.
